# EUROPEAN PATENT APPLICATION

(11) **EP 4 517 980 A1**
(43) Date of publication of application: **05.03.2025**
(21) Application number: 22969851.9
(22) Date of filing: 30.12.2022
(51) Int. Cl.: H01M 50/249, H01M 50/244, B60K 1/04

(54) **BATTERY AND ELECTRIC DEVICE**

(71) Applicant: Contemporary Amperex Technology (Hong Kong) Limited, Hong Kong (HK)
(72) Inventor: SHI, Weigang, Ningde City, Fujian 352100 (CN); LUO, Wenchao, Ningde City, Fujian 352100 (CN); WANG, Zhi, Ningde City, Fujian 352100 (CN); WU, Guangdang, Ningde City, Fujian 352100 (CN); SHI, Si, Ningde City, Fujian 352100 (CN)
(74) Representative: Kraus & Lederer PartGmbB
(86) International application number: PCT/CN2022/144238
(87) International publication number: WO 2024/138709

(57) **Abstract**

The present application provides a battery and a power consuming device. The battery includes: a battery module; and a case having a receiving cavity for receiving the battery module, wherein the case does not extend beyond an upper end face of the battery module in a height direction of the battery. In the technical solution of the present application, the case does not extend beyond the upper end face of the battery module, that is, the case does not completely wrap and enclose the battery module. This can omit some components of the case for forming a closed space (e.g., an upper cover for covering the upper end face of the battery module, a seal between the upper cover and the case, and a connector) compared with the structure of a closed case, so that the space occupied by these components is saved and the space occupancy of these components in the entire battery is reduced, so as to increase the space occupancy of the battery module in the entire battery, thereby increasing the energy density of the battery.

## Description

### Technical Field

The present application relates to the technical field of batteries, and in particular, to a battery and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

How to increase the energy density of the batteries is an urgent technical problem to be solved in the battery technology.

### Summary of the Invention

The present application provides a battery and a power consuming device, which can increase the energy density of the battery.

In a first aspect, the present application provides a battery, including: a battery module; and a case having a receiving cavity for receiving the battery module, wherein the case does not extend beyond an upper end face of the battery module in a height direction of the battery.

In the technical solution of the present application, the case does not extend beyond the upper end face of the battery module, that is, the case does not completely wrap and enclose the battery module. This can omit some components of the case for forming a closed space (e.g., an upper cover for covering the upper end face of the battery module, a seal between the upper cover and the case, and a connector) compared with the structure of a closed case, so that the space occupied by these components is saved and the space occupancy of these components in the entire battery is reduced, so as to increase the space occupancy of the battery module in the entire battery, thereby increasing the energy density of the battery.

According to some embodiments of the present application, the case includes a bottom plate, the bottom plate is configured to support the battery module, and the bottom plate is provided with a securing portion for securing the battery to a power consuming device.

In the above technical solution, the case is provided with a bottom plate on which the battery module is carried, the bottom plate is provided with a securing portion for securing the battery to the power consuming device, and the battery can be directly integrated into the power consuming device (e.g., a vehicle body) using this battery by means of the securing portion, thereby improving the integration of the battery. Moreover, the power consuming device may be used to directly seal the battery module, so that the size requirement of the battery for the receiving space of the power consuming device is reduced, and the integration between the battery and the power consuming device is improved while freeing up more space of the power consuming device, whereas more space can be provided for the battery module to increase the energy density of the battery. If the bottom plate that carries the battery module is connected to the power consuming device, the battery can be removed and maintained separately, thereby improving the convenience of mounting and maintenance of the battery while improving the integration between the battery and the power consuming device.

According to some embodiments of the present application, the securing portion does not extend beyond the battery module in a width direction of the bottom plate.

In the above technical solution, the securing portion does not extend beyond the battery module, so that it is possible to reduce the occupation of the space in the width direction of the bottom plate by the securing portion and even prevent the securing portion from additionally occupying the space in the width direction of the bottom plate, thereby reducing the waste of space in the width direction of the bottom plate and increasing the space occupancy of the battery module in the battery, thereby increasing the energy density of the battery.

According to some embodiments of the present application, the battery module at least partially covers the securing portion.

In the above technical solution, the battery module at least partially covers the securing portion, further reducing the occupation of the space outside the battery module by the securing portion, and contributing to further increasing the space occupancy of the battery module and thus the energy density of the battery.

According to some embodiments of the present application, the case further includes: a plurality of partition beams arranged at intervals on the bottom plate; wherein at least one battery module is arranged between two adjacent partition beams.

In the above technical solution, the partition beams arranged on the bottom plate can have a certain structural strengthening effect on the bottom plate, thereby increasing the structural strength of the bottom plate. Moreover, the partition beams can have a certain limiting effect on the battery module, improving the positional stability of the battery module on the bottom plate.

According to some embodiments of the present application, the partition beams do not extend beyond the upper end face of the battery module in the height direction of the battery.

In the above technical solution, the partition beams do not extend beyond the upper end face of the battery module, so that the space occupied by the partition beams in the height direction of the case is smaller, the space occupancy of the partition beams in the battery is reduced, and the waste of space above the battery module is reduced, thereby also contributing to increasing the energy density of the battery.

According to some embodiments of the present application, the securing portion is a through hole or a threaded hole, which penetrates the bottom plate and the partition beam.

In the above technical solution, the securing portion penetrates the bottom plate and the partition beam, and the partition beam and the securing portion share part of the space on the bottom plate, so that it is possible to reduce the space occupancy of the securing portion and the partition beam on the bottom plate, freeing up more layout space for the battery module, contributing to increasing the energy density of the battery. The securing portion penetrating the bottom plate and the partition beam increases the area of force application to the bottom plate, thereby increasing the connection strength of the securing portion. Moreover, it is convenient to secure the battery.

According to some embodiments of the present application, the plurality of partition beams are arranged at intervals in a length direction of the bottom plate, and each of the partition beams extends in the width direction of the bottom plate.

In the above technical solution, the plurality of partition beams are arranged at intervals in the length direction of the bottom plate to provide multi-point support and reinforcement for the bottom plate in the length direction, contributing to increasing the compressive strength of the bottom plate.

According to some embodiments of the present application, a flow channel for receiving a heat exchange medium is provided inside the bottom plate.

In the above technical solution, a flow channel for receiving a heat exchange medium is provided inside the bottom plate, and after receiving the heat exchange medium, the bottom plate can have a temperature adjustment effect on a battery cell arranged on the bottom plate, contributing to improving the temperature controllability and uniformity of the battery module. Moreover, the bottom plate integrates carrying and temperature adjustment functions, contributing to fully simplifying the structure of the battery, saving the space required for separate thermal management components, and further increasing the energy density of the battery.

According to some embodiments of the present application, the case further includes: two side plates arranged opposite to each other and connected to the bottom plate, wherein the two side plates and the bottom plate together form the receiving cavity.

In the above technical solution, two side plates are arranged oppositely on the bottom plate, so that the two side plates can further enhance the structural strength of the bottom plate and improve the carrying stability of the battery module. Moreover, the bottom plate and the side plates together forming the space for receiving the battery module contributes to improving the limiting effect of the bottom plate on the battery module.

According to some embodiments of the present application, the side plates are arranged spaced apart from the battery module.

In the above technical solution, the side plates are arranged spaced apart from the battery module, that is, there are some gaps between the side plates and the battery module, so that the assembly gaps can be provided for the assembling of the battery module and the bottom plate, and when the battery module is bonded to the bottom plate via an adhesive, the side plates can also function to block the overflowing adhesive. Moreover, the adhesive that overflows between the battery module and the side plates can bond the side plates to the battery module, providing a bonding area of the battery module, thereby further increasing the assembly structural strength of the battery.

According to some embodiments of the present application, the two side plates are located on two opposite sides in the width direction of the bottom plate.

In the above technical solution, the side plates are located on the two sides in the width direction of the bottom plate, and the length direction of the side plates then may extend in the length direction of the bottom plate, contributing to improving the length dimension of the side plates, so that the effect of increasing the structural strength of the bottom plate can be further enhanced; and it is also convenient to increase the corresponding area between the side plates and the battery module, and improve the limiting effect on the battery module.

According to some embodiments of the present application, a plurality of battery modules are provided, which are arranged side-by-side on the bottom plate in the width direction of the bottom plate.

In the above technical solution, the plurality of battery modules arranged on the bottom plate in the width direction make full use of the space on the bottom plate, also contributing to increasing the energy density of the battery.

According to some embodiments of the present application, the battery further includes: a restraining member arranged on a side of the battery module away from the bottom plate and extending in the length direction of the bottom plate, wherein the restraining member is connected to two adjacent battery modules in the width direction.

In the above technical solution, a restraining member is arranged between two adjacent battery modules, and the restraining member is connected to the two adjacent battery modules and extends in a direction perpendicular to the arrangement direction of the battery modules. The restraining member enables the two battery modules to restrain and limit each other, thereby improving the structural integration of multiple battery modules, and thus improving the structural stability of the battery modules on the bottom plate.

According to some embodiments of the present application, the restraining member is bonded to the two adjacent battery modules.

In the above technical solution, bonding the restraining member to the two adjacent battery modules is a simple process, facilitating the assembling operation of the battery, and contributing to improving the assembling efficiency of the battery.

According to some embodiments of the present application, each of the battery modules includes two end plates arranged at intervals in the length direction of the bottom plate and a plurality of battery cells stacked between the two end plates, and the restraining member has one end connected to one of the two end plates and the other end connected to the other one of the two end plates.

In the above technical solution, the restraining member is connected to the end plates at two ends of the battery module, contributing to improving the connection stability of the restraining member. The restraining member and the end plates are connected to form an integral structure to restrain the battery cells, contributing to improving the limiting effect on the battery cells.

According to some embodiments of the present application, an edge of the bottom plate is provided with a lifting hole for lifting the battery.

In the above technical solution, the provision of a lifting hole in the edge of the bottom plate facilitates the lifting and transportation of the entire battery. Moreover, the lifting point of the battery does not occupy additional space in the length or width direction of the bottom plate, contributing to increasing the energy density of the battery.

In a second aspect, the present application provides power consuming device, including a battery as described in any of the above solutions, the battery being configured to supply electric energy.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any inventive effort.
FIG. 1 is a schematic structural diagram of a vehicle according to some embodiments of the present application;
FIG. 2 is a schematic structural diagram of a battery according to some embodiments of the present application;
FIG. 3 is a top view of a battery according to some embodiments of the present application;
FIG. 4 is a top view of a battery according to some other embodiments of the present application;
FIG. 5 is a schematic structural diagram of a case according to some other embodiments of the present application;
FIG. 6 is a top view of a case according to some other embodiments of the present application;
FIG. 7 is a front view of a battery according to some other embodiments of the present application;
FIG. 8 is a top view of a battery according to some other embodiments of the present application;
FIG. 9 is a schematic diagram of a positional relationship between a case and a battery module according to some other embodiments of the present application; and
FIG. 10 is a schematic structural diagram of a battery according to some further embodiments of the present application.

In the accompanying drawings, the figures are not drawn to scale.

List of reference signs: 1000 - Vehicle; 100 - Battery; 10 - Battery module; 11 - Battery cell; 12 - End plate; 13 - Upper end face; 20 - Case; 21 - Bottom plate; 211 - Inlet; 212 - Outlet; 213 - Flow channel; 22 - Partition beam; 23 - Side plate; 24 - Receiving cavity; 30 - Securing portion; 40 - Restraining member; 50 - Lifting hole; 200 - Controller; 300 - Motor.

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. Apparently, the embodiments described are some of, rather than all of, the embodiments of the present application. All other embodiments obtained by those of ordinary skill in the art on the basis of the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include/comprise" and "has/have" and any variations thereof in the description and the claims of the present application as well as the brief description of the accompanying drawings described above are intended to cover non-exclusive inclusion. The terms "first", "second", etc. in the specification and the claims of the present application and in the foregoing drawings are used to distinguish different objects, rather than describing a specific order or a primary-secondary relationship.

The phrase "embodiment" mentioned in the present application means that the specific features, structures and characteristics described with reference to the embodiment may be encompassed in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

The phrase "a plurality of" appearing in the present application means two or more (including two).

In the present application, a battery cell may include a lithium-ion secondary battery, a lithium-ion primary battery, a lithium-sulfur battery, a sodium-ion battery or a magnesium-ion battery, etc. This is not limited in the embodiments of the present application. The battery cell may be flat, cuboid, or in other shapes, or may be a pouch battery cell. This is also not limited in embodiments of the present application.

A battery mentioned in the embodiments of the present application refers to a single physical module including one or more battery cells to provide a higher voltage and capacity. For example, the battery mentioned in the present application may be a battery module, a battery pack, etc.

A plurality of battery cells may be included in the battery. The plurality of battery cells may be connected in series, in parallel or in series-parallel. The series-parallel connection means that some of the plurality of battery cells are connected in series and some are connected in parallel. The plurality of battery cells may be directly connected in series or in parallel, or in series-parallel. It is also possible that the plurality of battery cells are first connected in series or in parallel or in series-parallel to form a plurality of battery modules which are then connected in series or in parallel or in series-parallel to form a whole. The battery may generally further include a case for packaging one or more battery cells or a plurality of battery modules.

The battery cell includes an electrode assembly and an electrolyte solution. The electrode assembly is composed of a positive electrode plate, a negative electrode plate and a separator. The battery cell operates mainly by relying on movements of metal ions between the positive electrode plate and the negative electrode plate. The electrode assembly may have a wound structure or a laminated structure. This is not limited in the embodiments of the present application.

Batteries have many outstanding advantages, such as low environmental pollution, high power density, long service life, wide adaptation range, small self-discharge factor, etc., and currently serve as an important part of new energy development. With the development of the new energy industry, batteries are gradually developing to be large-scale and more integrated.

In some technologies, a battery includes one or more battery modules, and a case for packaging the one or more battery modules. The battery forms a separate closed module. This separate module is mounted in a space reserved in the power consuming device to supply power to the power consuming device. The inventors have found that the battery with this structure has a low degree of integration and a low space utilization rationality, and there is a lot of waste of space, not contributing to increasing the energy density of the battery.

Based on the above considerations, in order to increase the energy density of the battery while improving the degree of integration of the battery, the inventors have designed a battery. The present application provides a battery, a case of which has a receiving cavity for receiving a battery module. The case does not extend beyond an upper end face of the battery module in a height direction of the battery.

In the technical solution of the present application, the case does not extend beyond the upper end face of the battery module, that is, the case does not completely wrap and enclose the battery module. This can omit some components of the case for forming a closed space (e.g., an upper cover for covering the upper end face of the battery module, a seal between the upper cover and the case, and a connector) compared with the structure of a closed case, so that the space occupied by these components is saved and the space occupancy of these components in the entire battery is reduced, so as to increase the space occupancy of the battery module in the entire battery, thereby increasing the energy density of the battery.

The battery disclosed in an embodiment of the present application may be used in, but not limited to, a power consuming device such as a vehicle, a ship or an aircraft. A power supply system provided with the power consuming device composed of a battery disclosed in the present application may be used.

An embodiment of the present application provides a power consuming device using a battery as a power supply. The power consuming device may be, but is not limited to, a mobile phone, a tablet, a notebook computer, an electric toy, an electric tool, a battery cart, an electric vehicle, a ship, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

The batteries described in the embodiments of the present application are not only applicable to the power consuming device described above, but also applicable to all power consuming devices using batteries. However, in order to make the description concise, the following embodiments will be described with a vehicle serving as the power consuming device as an example.

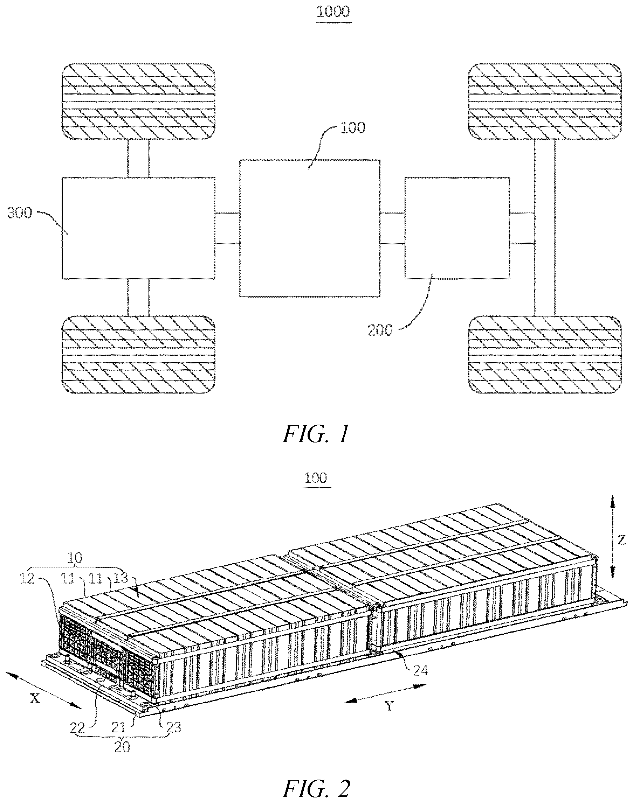

Referring to FIG. 1, FIG. 1 is a schematic diagram of a structure of a vehicle 1000 according to some embodiments of the present application. The vehicle 1000 may be a fuel vehicle, a gas vehicle or a new energy vehicle. The new energy vehicle may be a battery electric vehicle, a hybrid electric vehicle, an extended-range vehicle, etc. A battery 100 is provided inside the vehicle 1000, and the battery 100 may be arranged at the bottom, the front or the back of the vehicle 1000. The battery 100 may be configured to supply power to the vehicle 1000. For example, the battery 100 may serve as an operating power supply for the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 may not only serve as an operating power supply for the vehicle 1000, but also serve as a driving power supply for the vehicle 1000, in place of or partially in place of fuel or natural gas, to supply driving power to the vehicle 1000.

Referring to FIG. 2, FIG. 2 is a schematic structural diagram of a battery according to some embodiments of the present application. Some embodiments of the present application provide a battery 100. The battery 100 includes a battery module 10 and a case 20. The case 20 has a receiving cavity 24 for receiving the battery module 10, and the case 20 does not extend beyond an upper end face 13 of the battery module 10 in a height direction of the battery 100.

As mentioned above, the battery 100 may include one battery module 10, or may include two, three, or even more battery modules 10. Specifically, the battery 100 may include a plurality of battery cells 11. The plurality of battery cells 11 may be directly connected in series, in parallel, or in series-parallel (which means that some of the plurality of battery cells 11 are connected in series and some are connected in parallel) together to form a battery module 10. Of course, the battery 100 may also be formed by first connecting a plurality of battery cells 11 in series, in parallel, or in series-parallel to form a plurality of battery modules 10, then connecting the plurality of battery modules 10 in series, in parallel, or in series-parallel to form a whole, and receiving same in the receiving cavity 24 of the case 20.

The height direction of the battery 100 refers to the up-down direction of the battery 100 (the Z direction shown in FIG. 2) after the battery 100 is assembled and the battery 100 is in a regular placement state or is connected to a power consuming device.

By the case 20 not extending beyond the upper end face 13 of the battery module 10, it is meant that the case 20 does not cover the upper end face 13 of the battery module 10, and the case 20 can extend from a bottom face of the battery module 10 to the upper end face 13 of the battery module 10 in the height direction Z of the battery 100, forming a receiving cavity 24 that can cover the bottom face of the battery module 10, or that can cover the bottom face and part of side faces of the battery module 10, or that can cover the bottom face and all the side faces of the battery module 10.

Based on the above situation, the case 20 may only include a bottom wall for supporting the battery module 10, and the space above the bottom wall forms the receiving cavity 24. The case 20 may also be a hollow structure with one end open. An inner cavity of the case 20 forms the receiving cavity 24 for receiving the battery module 10. Moreover, the plane where the open end of the case 20 is located intersects with the height direction of the battery 100, and the open end of the case 20 does not extend beyond the upper end face 13 of the battery module 10.

The case 20 does not extend beyond the upper end face 13 of the battery module 10, that is, the case 20 does not completely wrap and enclose the battery module 10. This can omit some components of the case 20 for forming a closed space (e.g., an upper cover for covering the upper end face 13 of the battery module 10, a seal between the upper cover and the case 20, and a connector) compared with the structure of a closed case 20, so that the space occupied by these components is saved and the space occupancy of these components in the entire battery 100 is reduced, so as to increase the space occupancy of the battery module 10 in the entire battery 100, thereby increasing the energy density of the battery 100.

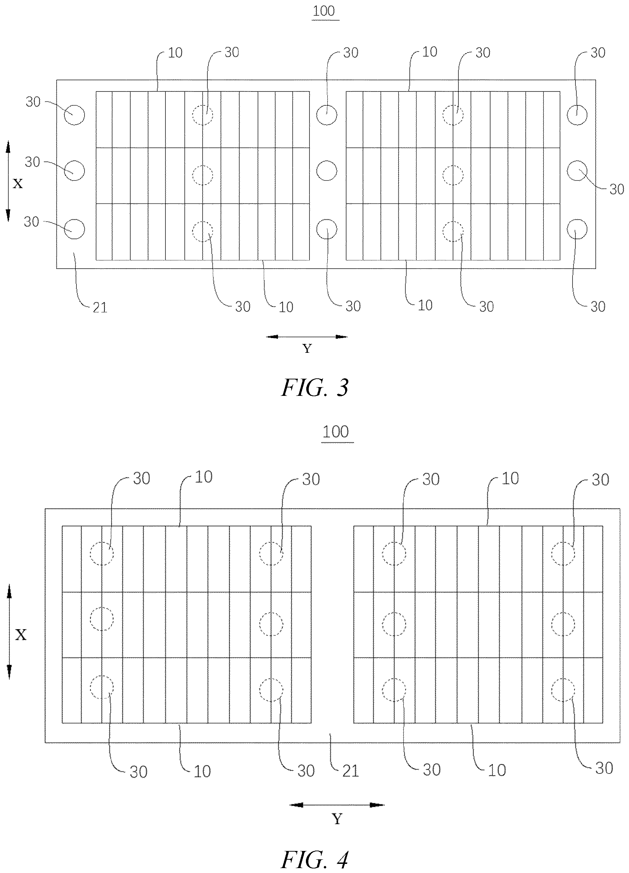

In some embodiments, still referring to FIG. 2, and further referring to FIG. 3, FIG. 3 is a top view of a battery according to some embodiments of the present application. The case 20 includes a bottom plate 21. The bottom plate 21 is configured to support the battery module 10. The bottom plate 21 is provided with a securing portion 30 for securing the battery 100 to a power consuming device.

The case 20 includes the bottom plate 21 for supporting the battery module 10, and the case 20 forms a receiving cavity. That is, the case 20 may only include the bottom plate 21 for supporting the battery module 10, and the space above the bottom plate 21 forms the receiving cavity 24. The case 20 may alternatively include other components that form the receiving cavity together with the bottom plate 21. For example, the case 20 may include side walls surrounding the bottom plate 21, and the side walls and the bottom plate 21 together form the receiving cavity 24. Of course, the side walls may be arranged in a closed loop around the bottom plate 21, or may be arranged in a non-closed loop around the bottom plate 21.

The bottom plate 21 is of a plate-like structure, that is, the bottom plate 21 has a larger surface, and the battery module 10 is carried on the surface of the bottom plate 21. The bottom plate 21 can be flexibly shaped according to the application environment. For example, the bottom plate 21 may have a regularly-shaped, such as rectangular and circular, or irregularly-shaped structure. As an example, the bottom plate 21 has a rectangular structure. It can be understood that a thickness direction of the bottom plate 21 may extend in the height direction of the battery 100. As an example, as shown in FIG. 2, the thickness direction of the bottom plate 21 and the height direction of the battery 100 both extend in the Z direction.

In some embodiments, the battery module 10 may be mounted on the bottom plate 21 by adhesive bonding, screwing, snap-fitting, riveting, etc., and the bottom plate 21 supports and limits the battery module 10.

The securing portion 30 is configured to secure and mount the battery 100 as a whole to the power consuming device. The securing portion 30 may have a variety of implementation structures. For example, the securing portion 30 may be a fastener such as a snap ring or a stud arranged on the bottom plate 21. The securing portion 30 may protrude from the surface of the bottom plate 21 in the thickness direction. For example, the securing portion 30 may protrude from the surface of the bottom plate 21 that faces away from the battery module 10, or may protrude from the surface of the bottom plate 21 that faces the battery module 10.

Depending on the specifications and mounting requirements of the battery 100 and other factors, one or more securing portions 30 may be provided. As an example, a plurality of columns of securing portions 30 may be arranged at intervals on the bottom plate 21, and a plurality of securing portions 30 are arranged at intervals in each column. The plurality of securing portions 30 can increase the area and balance of force application to the bottom plate 21, thereby improving the stability and reliability of the battery 100 secured to the power consuming device.

The bottom plate 21 is provided with the securing portion 30 for securing the battery 100 to the power consuming device, and the battery 100 can be directly integrated into the power consuming device (e.g., a vehicle body) using this battery 100 by means of the securing portion 30, thereby improving the integration of the battery 100. Moreover, the power consuming device may be used to directly seal the battery module 10, so that the size requirement of the battery 100 for the receiving space of the power consuming device is reduced, and the integration between the battery 100 and the power consuming device is improved while freeing up more space of the power consuming device, whereas more space can be provided for the battery module 10 to increase the energy density of the battery 100. If the bottom plate 21 that carries the battery module 10 is connected to the power consuming device, the battery 100 can be removed and maintained separately, thereby improving the convenience of mounting and maintenance of the battery 100 while improving the integration between the battery 100 and the power consuming device.

In some embodiments, still referring to FIG. 3, the securing portion 30 does not extend beyond the battery module 10 in a width direction of the bottom plate 21.

Specifically, as shown in FIGS. 2 and 3, the width direction of the bottom plate 21 extends in the X direction. The thickness direction of the bottom plate 21 extends in the Z direction in FIG. 2, and the width direction of the bottom plate 21 is perpendicular to the thickness direction of the bottom plate 21. The securing portion 30 and the battery module 10 share the space in the width direction of the bottom plate 21.

The securing portion 30 and the battery module 10 share part of the space in the width direction of the bottom plate 21, so that it is possible to reduce the occupation of the space in the width direction of the bottom plate 21 by the securing portion 30 and even prevent the securing portion 30 from additionally occupying the space in the width direction of the bottom plate 21, thereby reducing the waste of space in the width direction of the bottom plate 21 and increasing the space occupancy of the battery module 10, thereby increasing the energy density of the battery 100.

In some further embodiments, referring to FIG. 2 and further referring to FIG. 4, FIG. 4 is a top view of a battery according to some further embodiments of the present application. The battery module 10 at least partially covers the securing portion 30.

In other words, when viewed from the thickness direction (the Z direction shown in FIG. 2) of the bottom plate 21, the battery module 10 may completely cover the securing portion 30, or may cover part of the securing portion 30.

As an example, the battery module 10 completely covers the securing portion 30. For example, the bottom plate 21 may be of a rectangular plate structure, and the securing portion 30 does not extend beyond the battery module 10 in the width direction of the bottom plate 21 (the X direction shown in FIG. 4). Moreover, the securing portion 30 also does not extend beyond the battery module 10 in the length direction of the bottom plate 21 (the Y direction shown in FIG. 4).

The battery module 10 and the securing portion 30 share at least part of the space in a lateral direction of the bottom plate 21 (any direction perpendicular to the thickness direction of the bottom plate 21) to reduce the amount of occupation of the peripheral space of the battery module 10 by the securing portion 30, and even prevent the securing portion 30 from occupying additional peripheral space of the battery module 10, so as to increase the support area of the bottom plate 21 for the battery module 10, thereby increasing the space occupancy of the battery module 10 and increasing the energy density of the battery 100.

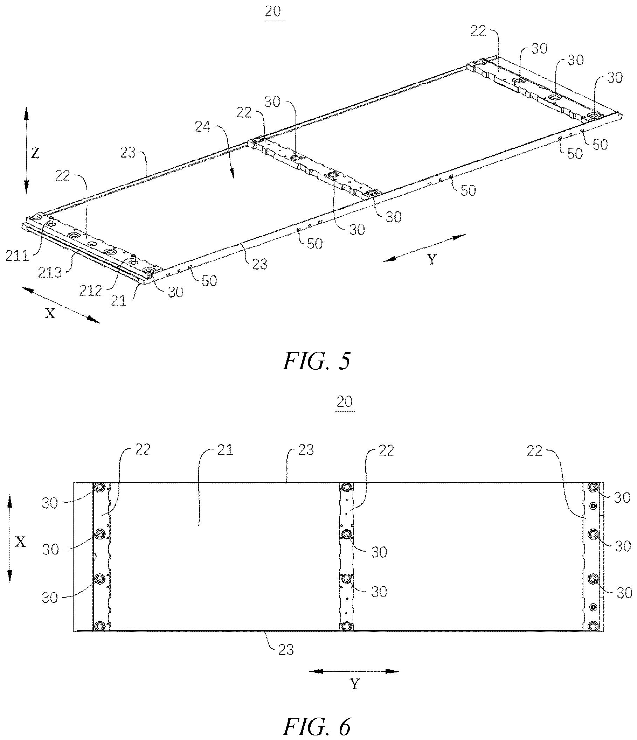

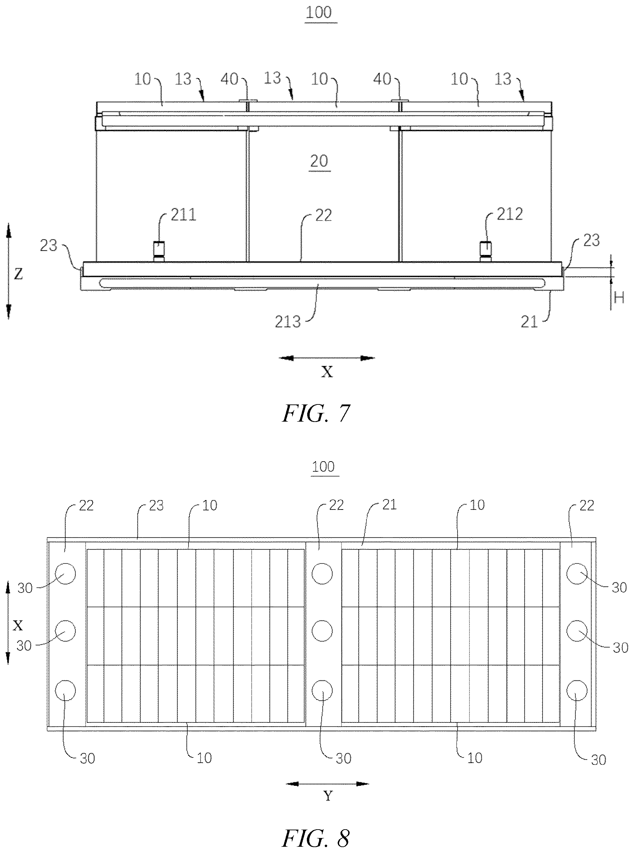

In some other embodiments, reference is made to FIG. 2, and further to FIGS. 5 to 8. FIG. 5 is a schematic structural diagram of a case according to some other embodiments of the present application; FIG. 6 is a top view of a case according to some other embodiments of the present application; FIG. 7 is a front view of a battery according to some other embodiments of the present application; and FIG. 8 is a top view of a battery according to some other embodiments of the present application. The case 20 further includes a plurality of partition beams 22. The plurality of partition beams 22 are arranged at intervals on the bottom plate 21. At least one battery module 10 is arranged between two adjacent partition beams 22.

The partition beams 22 can have a certain structural strengthening effect on the bottom plate 21, thereby increasing the structural strength of the bottom plate 21. Moreover, the partition beams 22 can have a certain limiting effect on the battery module 10, improving the positional stability of the battery module 10 on the bottom plate 21.

The partition beams 22 may be connected to the bottom plate 21 by welding, bonding, screwing, etc.

One battery module 10 may be arranged between two adjacent partition beams 22, or a plurality of battery modules 10 may be arranged in the arrangement direction of the partition beams 22. Of course, the plurality of battery modules 10 may alternatively be arranged in a direction perpendicular to the arrangement direction of the partition beams 22.

In some cases, the partition beams 22 may be connected to part of the structure of the battery module 10, to further improve the connection stability of the battery module 10.

Two, three or even more partition beams 22 may be provided, and the plurality of partition beams 22 may be arranged at intervals in the length direction of the bottom plate 21. Of course, in some other embodiments, the partition beams 22 may alternatively be arranged at intervals in the width direction of the bottom plate 21.

In some other embodiments, as shown in FIGS. 5 and 6, a plurality of partition beams 22 are arranged at intervals in the length direction (Y direction) of the bottom plate 21, and each partition beam 22 extends in the width direction (X direction) of the bottom plate 21.

It can be understood that each partition beam 22 may extend in the width direction (X direction) of the bottom plate 21 to two ends of the bottom plate 21 in the width direction (X direction), or may not extend to the two ends of the bottom plate 21 in the width direction (X direction).

The plurality of partition beams 22 are arranged at intervals in the length direction (Y direction) of the bottom plate 21 to provide multi-point support and reinforcement for the bottom plate 21 in the length direction, contributing to increasing the compressive strength of the bottom plate 21.

In some embodiments, still referring to FIG. 7, the partition beams 22 do not extend beyond the upper end face 13 of the battery module 10 in the height direction of the battery 100.

As described above, the partition beams 22 are arranged on the bottom plate 21, the bottom plate 21 is used to support the battery module 10, and the partition beams 22 do not extend beyond the upper end face 13 of the battery module 10. This means that in the height direction of the battery 100 (the thickness direction Z of the bottom plate 21), the height by which the partition beams 22 protrude out from the bottom plate 21 is less than or equal to the height by which the battery module 10 protrudes out from the bottom plate 21.

That is, in the thickness direction of the bottom plate 21 (the Z direction in FIG. 7), the height by which the partition beams 22 protrude out from the bottom plate 21 may be less than the height by which the battery module 10 protrudes out from the bottom plate 21, or the height by which the partition beams 22 protrude out from the bottom plate 21 may be equal to the height by which the battery module 10 protrudes out from the bottom plate 21. As an example, the height by which the partition beams 22 protrude out from the bottom plate 21 is less than the height by which the battery module 10 protrudes out from the bottom plate 21.

The partition beams 22 do not extend beyond the upper end face 13 of the battery module 10, so that the space occupied by the partition beams 22 in the height direction of the case 20 is smaller, the space occupancy of the partition beams 22 in the battery 100 is reduced, and the waste of space above the battery module 10 is reduced, thereby also contributing to increasing the energy density of the battery 100.

In some other embodiments, as shown in FIG. 8, the securing portion 30 is a through hole or a threaded hole, which penetrates the bottom plate 21 and the partition beam 22.

The securing portion 30 may be a through hole that penetrates the bottom plate 21 and the partition beam 22. When the battery 100 is mounted to the power consuming device, a main body of a fastener can pass through the through hole and be connected to the power consuming device to implement the securing of the battery 100. The securing portion 30 may alternatively be a threaded hole that penetrates the bottom plate 21 and the partition beam 22. A bolt may be screwed into the threaded hole and connected to the bottom plate 21 and the partition beam 22, so that the battery 100 is secured to the power consuming device by means of the bolt.

The securing portion 30 penetrates the bottom plate 21 and the partition beam 22, and the partition beam 22 and the securing portion 30 share part of the space on the bottom plate 21, so that it is possible to reduce the space occupancy of the securing portion 30 and the partition beam 22 on the bottom plate 21, freeing up more layout space for the battery module 10, contributing to increasing the energy density of the battery 100.

In some other embodiments, as shown in FIGS. 5 and 7, a flow channel 213 for receiving a heat exchange medium is provided inside the bottom plate 21.

Specifically, the flow channel 213 of the bottom plate 21 receives the heat exchange medium that can adjust the temperature of the battery cells 11 of the battery module 10. The heat exchange medium may be liquid or gas, and adjusting the temperature refers to heating or cooling the battery cells 11. In the case of cooling down or lowering the temperature of the battery cells 11, the bottom plate 21 receives a cooling medium to lower the temperature of the plurality of battery cells 11. In this case, the bottom plate 21 may also be called as a cooling component, a cooling system, a cooling plate, or the like, and the heat exchange medium received therein may also be called as a cooling medium, and more specifically, may be called as a cooling liquid or cooling gas. In addition, the bottom plate 21 may further be configured to heat and rise the temperature of the plurality of battery cells 11. This is not limited in the embodiments. As an example, the bottom plate 21 receives a cooling liquid to lower the temperature of the battery cells 11.

In some embodiments, the bottom plate 21 may be further provided with an inlet 211 and an outlet 212 which are in communication with the flow channel 213, so that the heat exchange medium can enter the flow channel 213 through the inlet 211 and be discharged from the flow channel 213 through the outlet 212. The heat exchange medium can circulate in the flow channel 213.

The flow channel 213 for receiving the heat exchange medium is provided inside the bottom plate 21, and after receiving the heat exchange medium, the bottom plate 21 can have a temperature adjustment effect on the battery cells 11 arranged on the bottom plate 21, contributing to improving the temperature controllability and uniformity of the battery module 10. Moreover, the bottom plate 21 integrates carrying and temperature adjustment functions, contributing to fully simplifying the structure of the battery 100, saving the space required for separate thermal management components, and further increasing the energy density of the battery 100.

In some other embodiments, still referring to FIGS. 5 to 8, the case 20 further includes two side plates 23. The two side plates 23 are arranged opposite to each other and connected to the bottom plate 21, and the two side plates 23 and the bottom plate 21 together form the receiving cavity 24.

Specifically, the two side plates 23 are located on two opposite sides of the battery module 10, and the side plates 23 protrude from an upper surface of the bottom plate 21 to form, together with the bottom plate 21, the receiving cavity 24 for receiving the battery module 10.

The height by which the side plates 23 protrude out from the bottom plate 21 may be flexibly set. In some embodiments, the height by which the side plates 23 protrude out from the upper surface of the bottom plate 21 may be equal to the height by which the battery module 10 protrudes out from the upper surface of the bottom plate 21. Of course, the height by which the side plates 23 protrude out from the upper surface of the bottom plate 21 may alternatively be less than the height by which the battery module 10 protrudes out from the upper surface of the bottom plate 21. As an example, the height by which the side plates 23 protrude out from the upper surface of the bottom plate 21 may be less than the height by which the battery module 10 protrudes out from the upper surface of the bottom plate 21.

In some embodiments, as shown in FIG. 7, the height H by which the side plates 23 protrude out from the bottom plate 21 may be less than or equal to 50 mm. For example, H may be 50 mm, 45 mm, 40 mm, 30 mm, 20 mm, 10 mm, 5 mm, etc. The side plates 23 form a short side wall structure with a smaller height, thereby reducing the space occupancy of the side plates 23, facilitating the improvement of the lightweight of the battery 100, and improving the assembling efficiency of the battery 100.

In some embodiments, the height H by which the side plates 23 protrude out from the bottom plate 21 may be greater than or equal to 5 mm. When the battery module 10 is bonded to the bottom plate 21 via an adhesive, the side plates 23 can function to block the overflowing adhesive to some extent. The height H by which the side plates 23 protrude out from the bottom plate 21 being greater than or equal to 5 mm contributes to allowing the side plates 23 to fully provide the function of blocking the overflowing adhesive. The overflowing adhesive can connect the side plates 23 to the battery module 10, thereby increasing the connection area of the battery module 10 and increasing the structural strength of the battery 100.

The two side plates 23 may be arranged opposite to each other in the length direction of the bottom plate 21. Of course, the two side plates 23 may alternatively be arranged opposite to each other in the width direction of the bottom plate 21.

The side plates 23 may be connected to the bottom plate 21 by screwing, riveting, welding, etc., or the side plates 23 and the bottom plate 21 may be formed in one piece.

The two side plates 23 are arranged oppositely on the bottom plate 21, so that the two side plates 23 can further enhance the structural strength of the bottom plate 21 and improve the carrying stability of the battery module 10. Moreover, the bottom plate 21 and the side plates 23 together forming the space for receiving the battery module 10 contributes to improving the limiting effect of the bottom plate 21 on the battery module 10.

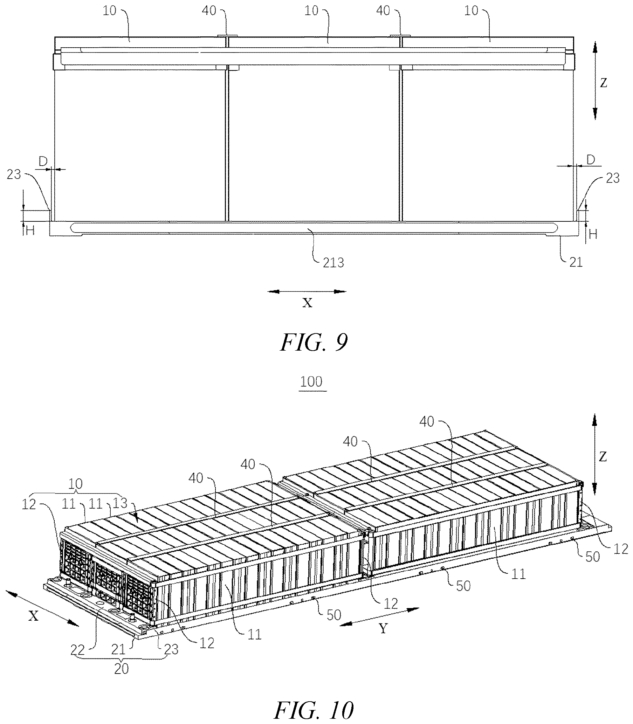

In some other embodiments, still referring to FIGS. 5 to 8, and further referring to FIG. 9, FIG. 9 is a schematic diagram of a positional relationship between the case and the battery module according to some other embodiments of the present application. The side plates 23 are arranged spaced apart from the battery module 10.

That is, after the battery module 10 is mounted into the receiving cavity 24 of the case 20, there may be gaps between the side plates 23 and the battery module 10.

As described above, in some embodiments, the battery module 10 may be bonded to the bottom plate 21 via the adhesive, and the gaps between the side plates 23 and the battery module 10 provide a reserved space for the overflowing adhesive. The overflowing adhesive is accumulated between the side plates 23 and the battery module 10, and can eventually connect the side plates 23 to the battery module 10, thereby improving the connection reliability of the battery module 10.

In some other embodiments, as shown in FIG. 9, a distance D between each side plate 23 and the battery module 10 may be greater than or equal to 1 mm, leaving enough space for the overflowing adhesive, and reserving sufficient assembly clearance, so that the risk of interference between the battery module 10 and the side plate 23 due to dimensional errors is reduced.

In some embodiments, the distance D between the side plate 23 and the battery module 10 may be less than or equal to 10 mm, to reduce the waste of internal space of the case 20 and increase the energy density.

In some embodiments, the two side plates 23 are located on two opposite sides in the width direction of the bottom plate 21.

That is, the side plates 23 are arranged opposite to each other in the width direction of the bottom plate 21 (the X direction shown in FIG. 5), and the two side plates 23 may extend to some extent in the length direction of the bottom plate 21 (the Y direction shown in FIG. 5).

It can be understood that the side plates 23 can extend to two ends of the bottom plate 21 in the length direction, or the side plates 23 may be separated by a certain distance from the two ends of the bottom plate 21 in the length direction. Of course, in some other embodiments, the side plates 23 may extend beyond the bottom plate 21 in the length direction of the bottom plate 21.

The side plates 23 are located on the two sides in the width direction of the bottom plate 21, and the length direction of the side plates 23 then may extend in the length direction of the bottom plate 21, contributing to improving the length dimension of the side plates 23, so that the effect of increasing the structural strength of the bottom plate 21 can be further enhanced; and it is also convenient to increase the corresponding area between the side plates 23 and the battery module 10, and improve the limiting effect on the battery module 10.

In some embodiments, referring to FIG. 2 again, a plurality of battery modules 10 are provided, and the plurality of battery modules 10 are arranged side-by-side on the bottom plate 21 in the width direction (the X direction) of the bottom plate 21. The plurality of battery modules 10 arranged on the bottom plate 21 contributes to making full use of the space on the bottom plate 21, thereby increasing the energy density of the battery 100.

It can be understood that, as shown in FIG. 2, a plurality of battery modules 10 may also be arranged in the length direction of the bottom plate 21, that is, all the battery modules 10 are arranged in a matrix on the bottom plate 21.

In some further embodiments, referring to FIGS. 2 to 9, and further referring to FIG. 10, FIG. 10 is a schematic structural diagram of a battery according to some further embodiments of the present application. The battery 100 further includes a restraining member 40. The restraining member 40 is arranged on a side of the battery module 10 away from the bottom plate 21 and extends in the length direction of the bottom plate 21. The restraining member 40 is connected to two adjacent battery modules 10 in the width direction.

The restraining member 40 may be connected to the battery module 10 by welding, bonding, etc. The structure of the restraining member 40 may also be implemented in various ways. For example, the restraining member 40 may be in the shape of an elongated strip. The elongated strip-shaped restraining member 40 may be connected to surfaces of two adjacent battery modules 10 that face each other, or may be connected to surfaces of the two adjacent battery modules 10 that face away from the bottom plate 21.

The restraining member 40 is configured to connect the two adjacent battery modules 10 to form a main body, so that the connected two adjacent battery modules 10 can restrict each other. The structural integration of the plurality of battery modules 10 is improved, and the amplitude and probability of forced jump of the battery modules 10 are reduced during vibration of the battery 100, thereby enhancing the structural strength of the battery 100.

In some embodiments, as shown in FIG. 9, the restraining member 40 is bonded to the two adjacent battery modules 10.

Specifically, the restraining member 40 and the two adjacent battery modules 10 may be bonded to each other via an adhesive.

In some embodiments, the restraining member 40 has a sheet-like structure, and a surface of a side of the restraining member 40 in its thickness direction and a surface of a side of the battery module 10 that faces away from the bottom plate 21 are bonded to each other.

Bonding the restraining member 40 to the two adjacent battery modules 10 is a simple process, facilitating the assembling operation of the battery 100, and contributing to improving the assembling efficiency of the battery 100.

In some embodiments, each of the battery modules 10 includes two end plates 12 arranged at intervals in the length direction (the Y direction shown in FIG. 10) of the bottom plate 21, and a plurality of battery cells 11 stacked between the two end plates 12. In the length direction of the bottom plate 21, the restraining member 40 has one end connected to one of the two end plates 12, and the other end connected to the other one of the two end plates 12.

In the battery module 10, the end plates 12 function to fasten and restrain the plurality of battery cells 11. The two end plates 12 and the battery cells 11 arranged between the two end plates 12 can be bound by means of steel belts, the side plates 23 or fasteners such as cable ties to form an integral structure.

When the battery module 10 is mounted in the receiving cavity 24 of the case 20, the end plates 12 may be connected to the case 20 by welding, screwing, riveting, etc. For example, the end plates 12 may be connected to the bottom plate 21 of the case 20. Based on the implementation in which the case 20 includes the partition beams 22, the end plates 12 may alternatively be connected to the partition beams 22 by welding, screwing, etc.

The end plates 12 are located on the outermost sides of the battery module 10 in the arrangement direction (the Y direction shown in FIG. 10) of the battery cells 11, and the two ends of the restraining member 40 are each connected to a corresponding end plate 12. The restraining member 40 and the end plates 12 may be connected to each other by means of fasteners such as studs, or may be snap-fitted with each other by means of snap-fit members, or may be connected to each other by welding, bonding, etc.

The restraining member 40 is connected to the end plates 12 at the two ends of the battery module 10, contributing to improving the connection stability of the restraining member 40. The restraining member 40 and the end plates 12 are connected to form an integral structure to restrain the battery cells 11, contributing to improving the limiting effect on the battery cells 11.

In some embodiments, still referring to FIG. 10, an edge of the bottom plate 21 is provided with a lifting hole 50 for lifting the battery 100.

Specifically, the bottom plate 21 has an upper surface facing the battery module 10, a lower surface facing away from the battery module 10, and side faces connected to the upper surface and the lower surface. The lifting hole 50 may be provided in the side face of the bottom plate 21.

A plurality of lifting holes 50 may be provided, and the plurality of lifting holes 50 are arranged at intervals in the side faces of the bottom plate 21 to increase the number of lifting points of the battery 100, thereby improving the balance of force application to the battery 100.

In some embodiments, the side faces of the bottom plate 21 include two first side faces arranged opposite to each other in the width direction (the X direction shown in FIG. 10) of the bottom plate 21, and the lifting holes 50 may be provided in the first side faces. A plurality of lifting holes 50 may be provided, and the plurality of lifting holes 50 may be distributed at intervals in the two first side faces.

The provision of a lifting hole 50 in the edge of the bottom plate 21 facilitates the lifting and transportation of the entire battery 100. Moreover, the lifting point of the battery 100 does not occupy additional space in the length or width direction of the bottom plate 21, contributing to increasing the energy density of the battery 100.

Some embodiments of the present application also provide a power consuming device, including a battery 100 of any of the above solutions, the battery 100 being configured to supply electric energy. The power consuming device may be any of power consuming apparatuses or systems as described above.

Referring to FIGS. 2 to 10, some embodiments of the present application provide a battery 100. The battery 100 includes a battery module 10, a case 20 and a restraining member 40. The case 20 has a receiving cavity for receiving the battery module 10, and the case 20 does not extend beyond an upper end face 13 of the battery module 10 in a height direction of the battery 100. The case 20 includes a bottom plate 21, two side plates 23 and a plurality of partition beams 22. The two side plates 23 are located on two opposite sides in a width direction of the bottom plate 21 and are connected to the bottom plate 21. The two side plates 23 and the bottom plate 21 together enclose a receiving cavity. The plurality of partition beams 22 are arranged in the receiving cavity and connected to the bottom plate 21, and the plurality of partition beams 22 are arranged at intervals in a length direction of the bottom plate 21. Each partition beam 22 extends in the width direction of the bottom plate 21. The bottom plate 21 is configured to support the battery module 10. A plurality of battery modules 10 are provided. A plurality of battery modules 10, which are arranged side-by-side on the bottom plate 21 in the width direction of the bottom plate 21, are provided between every two adjacent partition beams 22. In the width direction of the bottom plate 21, the side plates 23 are arranged spaced apart from the battery module 10.

Each of the battery modules 10 includes two end plates 12 arranged at intervals in the length direction of the bottom plate 21, and a plurality of battery cells 11 stacked between the two end plates 12. The end plates 12 are connected to corresponding partition beams 22. The restraining member 40 is arranged on a side of the battery module 10 away from the bottom plate 21 and extends in the length direction of the bottom plate 21. The restraining member 40 is bonded to the battery cells 11 of two adjacent battery modules 10. In the length direction of the bottom plate 21, one end of the restraining member 40 is bolted to one of the end plates 12 of the battery module 10, and the other end of the restraining member 40 is bolted to the other end plate 12 of the battery module 10.

The bottom plate 21 is provided with a securing portion 30 for securing the battery 100 to the power consuming device. The securing portion 30 does not extend beyond the battery module 10 in the width direction of the bottom plate 21. The securing portion 30 is a threaded hole, which penetrates the bottom plate 21 and the partition beam 22.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery, comprising:
a battery module; and
a case having a receiving cavity for receiving the battery module, wherein the case does not extend beyond an upper end face of the battery module in a height direction of the battery.

2. The battery according to claim 1, wherein the case comprises a bottom plate, the bottom plate is configured to support the battery module, and the bottom plate is provided with a securing portion for securing the battery to a power consuming device.

3. The battery according to claim 2, wherein the securing portion does not extend beyond the battery module in a width direction of the bottom plate.

4. The battery according to claim 3, wherein the battery module at least partially covers the securing portion.

5. The battery according to claim 2 or 3, wherein the case further comprises:
a plurality of partition beams arranged at intervals on the bottom plate;
wherein at least one battery module is arranged between two adjacent partition beams.

6. The battery according to claim 5, wherein the partition beams do not extend beyond the upper end face of the battery module in the height direction of the battery.

7. The battery according to claim 5 or 6, wherein the securing portion is a through hole or a threaded hole, which penetrates the bottom plate and the partition beam.

8. The battery according to any one of claims 5-7, wherein the plurality of partition beams are arranged at intervals in a length direction of the bottom plate, and each of the partition beams extends in the width direction of the bottom plate.

9. The battery according to any one of claims 2-8, wherein a flow channel for receiving a heat exchange medium is provided inside the bottom plate.

10. The battery according to any one of claims 2-9, wherein the case further comprises: two side plates arranged opposite to each other and connected to the bottom plate, wherein the two side plates and the bottom plate together form the receiving cavity.

11. The battery according to claim 10, wherein the side plates are arranged spaced apart from the battery module.

12. The battery according to claim 10 or 11, wherein the two side plates are located on two opposite sides in the width direction of the bottom plate.

13. The battery according to any one of claims 2-12, wherein a plurality of battery modules are provided, which are arranged side-by-side on the bottom plate in the width direction of the bottom plate.

14. The battery according to claim 13, further comprising:
a restraining member arranged on a side of the battery module away from the bottom plate and extending in the length direction of the bottom plate, wherein the restraining member is connected to two adjacent battery modules in the width direction.

15. The battery according to claim 14, wherein the restraining member is bonded to the two adjacent battery modules.

16. The battery according to claim 14 or 15, wherein each of the battery modules comprises two end plates arranged at intervals in the length direction of the bottom plate and a plurality of battery cells stacked between the two end plates, and the restraining member has one end connected to one of the two end plates and the other end connected to the other one of the two end plates.

17. The battery according to any one of claims 2-16, wherein an edge of the bottom plate is provided with a lifting hole for lifting the battery.

18. A power consuming device, comprising a battery according to any one of claims 1-17, the battery being configured to supply electric energy.
